# EUROPEAN PATENT APPLICATION

(11) **EP 1 675 285 A1**
(43) Date of publication of application: **28.06.2006**
(21) Application number: 04293127.9
(22) Date of filing: 23.12.2004
(51) Int. Cl.: H04B 10/18

(54) **Dispersion management for low dispersion fibers in DWDM core networks**

(71) Applicant: ALCATEL, 75008 Paris (FR)
(72) Inventor: Antona, Jean-Cristophe, 75014 Paris (FR); Bigo, Sébastien, 91300 Massy (FR)
(74) Representative: Rausch, Gabriele

(57) **Abstract**

The present invention provides a dispersion management system for a WDM transmission network comprising Dispersion Compensation Modules spread over the system in such a way that the system shows improved robustness to interchannel non-linearities. It provides also an object to suggest a method allowing maximum flexibility so to avoid a too costly implementation. This object is achieved in accordance with the invention by the choice to spread the DCM after each transmission lines span periodically over the system except at specific location having a dispersion corresponding to a value satisfying a linear law ax+b with b being the applied dispersion pre-compensation and a defining an average level of a non-zero in-line residual dispersion for the WDM channels higher than 10ps/nm/span in absolute value.

## Description

### Technical Field

The present invention relates to a dispersion management system for a wavelength division multiplexing DWDM transmission network comprising transmitters, transmission lines spans, receivers, amplifiers and dispersion compensation modules spread regularly over the system. Furthermore, it is related to a method for compensating dispersion and optical signals to be transmitted via a WDM transmission network comprising transmitters, transmission lines, spans, receivers, amplifiers and dispersion compensation modules spread regularly over the system.

### Background of the invention

Nonlinear optical effects such as four-wave mixing (FWM) and Cross-Phase Modulation (XPM) can degrade the optical signal transmission through long-haul optical networks. Increasing the absolute value of the local chromatic dispersion in the fibers decreases both FWM and XPM detrimental effects. Indeed, accumulated dispersion itself causes broadening in transmitted optical pulses since it implies different group velocities for optical pulses at different wavelengths. In fact, the relative group velocity of pulses at different wavelengths will be high therefore diminishing the interaction time between such pulses with different wavelengths.

A specific pulse will just see an averaged effect, the average power of other channels, that will result in a constant phase shift through XPM which implies no penalty at all.

While a high local dispersion reduces non-linear effects such as FWM and XPM, the accumulated dispersion in these long-haul systems must be compensated. In long-haul repeatered transmission systems using optical fibers, the interplay of the accumulation of large amounts of the chromatic dispersion and self-phase modulation (SPM) creates noise and distortion in the optical system. Indeed, conversely to FWM and XPM the non-linear effect SPM tends to increase with increasing dispersion. Dispersion maps, i.e., the dispersion as a function of the transmission distance, attempt to minimize the combined effects of chromatic dispersion and non-linearities (SPM, XPM, FWM).

For example, current submarine transmission systems generally have span lengths in the 45-50 km range and use a dispersion map which provides an average dispersion at a wavelength of 1560 nm that is approximately -2ps/nm/km in the approximately 90% of the transmission spans. The negative dispersion fibers used in those spans may be single fiber types or combinations of two fibers, in which case the fiber types or combinations of two fibers, in which case the fiber following the amplifier has a larger effective area to reduce nonlinear effects and the second fiber has a lower dispersion slope. The dispersion slope of a fiber is the change in the dispersion per unit wavelength. After approximately 10 spans, the accumulated negative dispersion is then compensated at a given wavelength by an additional span of single mode fiber (SMF).

To mitigate propagation impairments (dispersion, single channel and multichannel nonlinear effects) a dispersion management is applied. It consists usually of the distribution of dispersion compensation modules in a periodic way belong the line. After each line fiber span, an in-line dispersion compensating module (DCM) is inserted. Usually, also a pre-compensation module and a post-compensation module are inserted respectively at the transmitter and receiver side, or after / before a regenerator. By extension, the term "pre-compensation" is also used to designate the accumulated dispersion over the pre-compensation module. Thus in-line DCM are set to compensate either an average ratio of the dispersion accumulated in a fiber span or such that the "accumulated dispersion per span", i.e. the accumulated dispersion in both the line fiber span and the DCM, is kept constant from one span to another. According to other solutions, the cumulated dispersion can be periodically reset to zero before a next line fiber span using a specific DCM.

In US 6,580,861 is described an optical transmission system including a series of consecutive blocks of optical fiber. Each block of this system includes a first, second and third series of spans of optical fiber, where the second series of the spans compensates for accumulated dispersion in the first and third series in the wavelengths range of transmission. In such a system, the accumulated dispersion at a wavelength between the used end channels is brought back to zero after each block.

Such solution is particularly unfavourable for dense WDM transmissions over fibers with small dispersion i.e. less than 10ps/nm/km like LEAF (Large Effective Area Fiber with usually 4ps/nm/km at 1550nm). Indeed, the use of such fibers are severally impaired by inter-channel nonlinear effects for channel bit rates lower than 40 Gb/s due to their low dispersion.

### Summary of the invention

In view of the above, it is an object of the present invention to provide a dispersion management system for a WDM transmission network comprising dispersion compensation modules spread over the system in such a way that the system shows improved robustness to inter-channel non-linearities. Furthermore, it is also an object to suggest a method allowing maximum flexibility so to avoid a too costly implementation.

This object is achieved in accordance with the invention by the choice to spread the DCM after each transmission lines span periodically over the system except at specific locations having an accumulated dispersion corresponding to a value satisfying a quasi-linear law of the type "ax+b" with b being the applied dispersion pre-compensation and a defining an average level of the accumulated dispersion per span for the WDM channels higher than 10ps/nm/span in absolute value. Advantageously, the method for compensating dispersion on optical signals to be transmitted via a WDM transmission network according to the invention is particularly optimized for transmission lines spans of low dispersion.

According to an embodiment of the invention, the omission of a DCM occurs at a non-periodic number of spans. According to an alternative embodiment, the omission occurs periodically, possibly every five spans. According to another alternative embodiment, the omission occurs at node locations in an optical network. According to a last alternative embodiment, the method applies only to a subpart of the WDM transmission network.

Advantageous developments of the invention are described in the following description and the drawings.

### Description of the drawings

- Fig. 1: shows the cumulated dispersion according to the distance for a dispersion management system according to the invention;
- Fig. 2: shows the cumulated dispersion of an alternative embodiment according to the invention;
- Fig. 3: shows a comparison of a dispersion management according to prior art and to the present invention.

### Detailed description of preferred embodiments

Despite conventional dispersion management, G655 fibers are less tolerant to non-linearities than fibers with higher dispersion, and thus offer poorer relative performance as channel spacing is reduced (down to 25 GHz). Indeed, numerical simulations show that even with optimal dispersion management, the maximum tolerable amount of non-linearities (it may be the maximum power at given distance, or the product "power x distance", or the non-linear phase, for 1 dB OSNR penalty) is reduced by more than 3 dB when decreasing the dispersion from 17ps/nm/km/ (SMF) to 4ps/nm/km, should we consider 10 Gb/s-based WDM transmissions with 100 Ghz channel spacing. For lower channel spacing, the reduction is even strengthened.

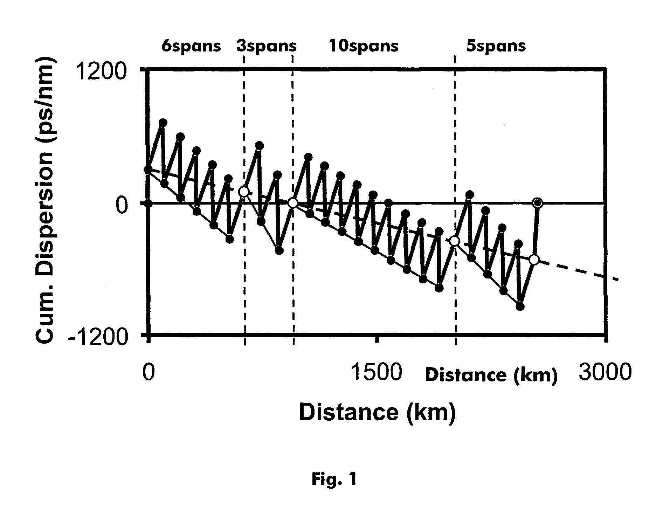

On figure 1 is shown the cumulative dispersion (ps/nm) according to the distance (km) of a dispersion management system for a WDM transmission network according to the invention. The corresponding dispersion management system comprises at the beginning a dispersion pre-compensation module in the shown example on figure 1 with positive dispersion. Accordingly, the dispersion management system comprises at the end a dispersion post-compensation module, here with negative dispersion. In between, the dispersion shows a sawtooth behaviour coming from the DCM spread regularly over the system. For example, after the pre-compensation module, the dispersion of optical signals transmitted through the system increases according to the distance up to reaching a maximum corresponding to the end of a transmission line span. Then follow a sharp decrease in dispersion corresponding to the effect of the presence of a DCM (DCM length is not considered when talking of transmission length in terrestrial systems, as the DCM are generally localized within dual-stage amplifiers). Such behaviour is repeated six times corresponding to six spans before the first DCM is omitted (see the white dot on figure 1). The consequence of the omission of a DCM ends up of a continuous increase of a two spans of the dispersion. The next omission of a DCM is set after three transmission lines ends. Afterwards, the omission is set after ten and finally five transmission lines spans.

Each omission of a DCM at the dispersion management system according to the invention occurs at specific location having a cumulated dispersion corresponding to a value satisfying a quasi-linear law of the type *ax+b*. The value b corresponds to the applied dispersion pre-compensation. The slope of such linear law a defines an average level of a non-zero accumulated dispersion per span for the WDM channels higher than 10ps/nm/span in absolute value. On the example shown on figure 1, the slope is chosen as -34ps/nm/span in average (corresponding to a compensation rate of 108 % per subdivision). The use of such quasi-linear law for the choice of the omission of DCM can end up in a periodic pattern for the dispersion management system as shown on figure 1. The omission of DCM at a non-periodic number of spans can be advantageously used to be adapted to the location of the nodes in a terrestrial network.

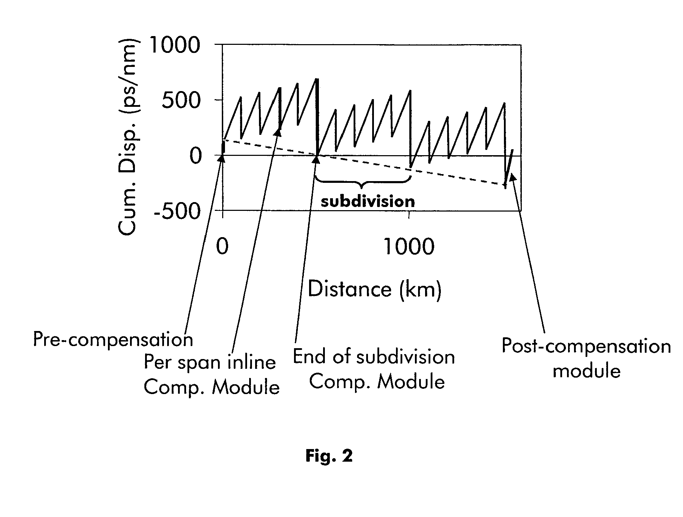

On figure 2 is shown the cumulative dispersion of a dispersion management system according to another embodiment of the invention. As for the embodiment of figure 1, a pre-compensation as well as a post-compensation module is applied. But now the linear law is chosen such that the omission of a DCM is periodic (in the example shown on figure 2 every five spans). In such a way the dispersion management system shows a double-periodic dispersion maps with periodic subdivisions.

This figure shows an example of dispersion map with periodic non-compensation. It represents the cumulated dispersion with respect to the propagation distance for transmission of LEAF fiber 4.25 ps/nm/km). The dispersion is first set to 300ps/nm using some pre-compensation at transmitter side, then the system consists in the concatenation of sections of line fiber and in-line DCM (full circles) except every five spans in average (empty circles). At receiver side, some post-compensation is added. The average in-line residual dispersion is - 34ps/nm while it is locally -149ps/nm or +425ps/nm (absence of DCM).

The distribution of the dispersion compensation along the transmission network according to the invention is such that some DCM are not used after each line fiber span within a line amplifier. This breaks explicitly the span-periodicity in the dispersion management creating some sort of multiple scale dispersion maps in order to improve the transmission performance while free place for new transmission-network elements at the locations of the omitted DCM.

To quantify more accurately the benefit of double period dispersion management, it is assessed the relationship between the OSNR penalty and the non-linear phase, for conventional (optimized) Single-Period Dispersion Maps. And Double-period, (optimized) Periodically non-compensated Dispersion Maps according to the invention as shown on Fig. 1.

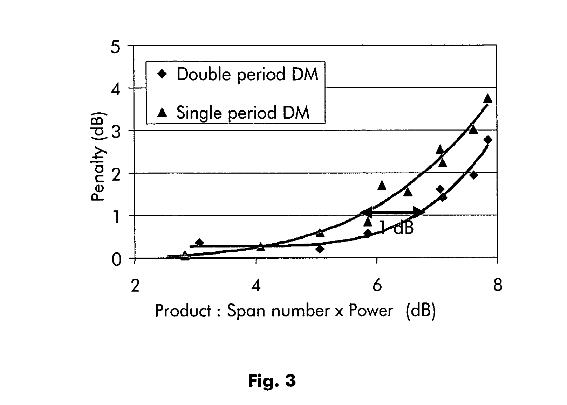

On Fig. 3 is shown the relationship between OSNR penalty and Nonlinear phase (here product Span number x Power) for optimal dispersion maps, following two strategies: conventional, single-period dispersion maps, or double-period, periodically non-compensated maps (case shown on Fig. 1).

The comparison as shown on Fig. 3 highlights the fact that the 1dB-penalty nonlinear threshold is 1 dB higher with periodically non-compensated maps, rather than with single-period dispersion maps. It means 1 extra dB in power margin, for system design.

Since an optical network may be build using different kinds of fiber i.e. will have most probably heterogeneous properties, it may be advantageous to implement the present invention only over subpart of the network.

## Claims

1. A dispersion management system for a Wavelength Division Multiplexing WDM transmission network comprising transmitters, transmission lines spans, receivers, amplifiers and Dispersion Compensation Modules DCM spread regularly over the system **characterised in, that** the DCMs are spread after each transmission line span periodically over the system except at specific locations having an accumulated dispersion corresponding to a value satisfying a quasi-linear law of the type *ax+b* with b being the applied dispersion pre-compensation and a defining a non-zero average level of the accumulated dispersion per span for the WDM channels higher than 10ps/nm/span in absolute value.

2. The dispersion management system according to claim 1 **characterised in, that** the omission of a dispersion compensation module occurs at a non-periodic number of spans.

3. The dispersion management system according to claim 1 **characterised in, that** the omission of a dispersion compensation module occurs at a periodic number of spans possibly every five spans.

4. The dispersion management system according to claim 1 **characterised in, that** the omission of a dispersion compensation module occurs at the locations of the nodes in optical networks.

5. The dispersion management system according to one of the claims 1 to 5, applied to a subpart of the WDM transmission network.

6. A method for compensating dispersion on optical signals to be transmitted via a Wavelength Division Multiplexing WDM transmission network comprising transmitters, transmission lines spans, receivers, amplifiers and Dispersion Compensation Module DCM spread regularly over the system, the method being **characterised by** applying the DCMs periodically after each transmission span over the system except at specific location having an accumulated dispersion corresponding to a value satisfying a linear law *ax+b* with b being the applied dispersion pre-compensation and a defining a non-zero average level of the accumulated dispersion per span for the WDM channels higher than 10ps/nm/span in absolute value.
